# EUROPEAN PATENT APPLICATION

(11) **EP 4 800 872 A1**
(43) Date of publication of application: **02.09.2026**
(21) Application number: 25893266.4
(22) Date of filing: 04.09.2025
(51) Int. Cl.: H02J 4/00, H02J 13/00

(54) **POWER SUPPLY CONTROL APPARATUS, POWER SUPPLY DEVICE AND LOGISTICS DISTRIBUTION SYSTEM**

(30) Priority: 04.12.2024 CN 202422988732 U
(71) Applicant: Guangdong Lead Intelligent Logistics Technology Co., Ltd., Zhuhai, Guangdong 519000 (CN)
(72) Inventor: DAI, Liqiang, Zhuhai, Guangdong 51900 (CN); FAN, Mingkang, Zhuhai, Guangdong 51900 (CN); DUAN, Xiaowei, Zhuhai, Guangdong 51900 (CN); LIANG, Hao, Zhuhai, Guangdong 51900 (CN)
(74) Representative: Rau, Schneck & Hübner Patentanwälte Rechtsanwälte PartGmbB
(86) International application number: PCT/CN2025/119023
(87) International publication number: WO 2026/118588

(57) **Abstract**

The present disclosure relates to a power supply control device, a power supply apparatus, and a logistics distribution system, and belongs to the technical field of power supply control. The device includes: a master controller; a plurality of slave controllers, a first end of each slave controller being electrically connected to the master controller; a plurality of power supply devices, each power supply device being electrically connected to a second end of a corresponding slave controller; wherein, when the master controller outputs a control signal for operating a first power supply device to a first slave controller, the first slave controller controls the first power supply device to operate in response to the control signal; wherein the first slave controller is one of the plurality of slave controllers, and the first power supply device is one of the plurality of power supply devices and corresponds to the first slave controller.

## Description

The present disclosure claims priority to a Chinese patent application No. 202422988732.8 filed with the CNIPA on December 4, 2024 and entitled "POWER SUPPLY CONTROL DEVICE, POWER SUPPLY APPARATUS, AND LOGISTICS DISTRIBUTION SYSTEM", which is hereby incorporated by reference in its entirety.

### TECHNICAL FIELD

An embodiment of the present disclosure relates to the technical field of power supply control, and particularly to a power supply control device, a power supply apparatus and a logistics distribution system.

### BACKGROUND

With the development of artificial intelligence in the logistics and warehousing industry, a logistics apparatus or warehousing apparatus has become increasingly intelligent. In order to supply sufficient power to these apparatus, each logistics apparatus or warehousing apparatus is usually controlled by a unified controller, and the logistics apparatus or warehousing apparatus can be energized under the control of the controller. However, when there are a large number of logistics apparatus or warehousing apparatus, the communication and interaction between a plurality of logistics apparatus or warehousing apparatus and the controller will increase the processing load of the controller.

### SUMMARY

An objective of embodiments of the present disclosure is to provide a new technical solution for power supply control.

According to a first aspect of embodiments of the present disclosure, a power supply control device is provided, which comprises:
a master controller;
a plurality of slave controllers, a first end of each slave controller being electrically connected to the master controller;
a plurality of power supply devices, each power supply device being electrically connected to a second end of a corresponding slave controller;
wherein, when the master controller outputs a control signal for operating a first power supply device to a first slave controller, the first slave controller controls the first power supply device to operate in response to the control signal; wherein the first slave controller is one of the plurality of slave controllers, and the first power supply device is one of the plurality of power supply devices and corresponds to the first slave controller.

Optionally, the device further comprises a first aviation power/network cable, and the first end of each slave controller is electrically connected to the master controller through the first aviation power/network cable.

Optionally, the device further comprises a second aviation power/network cable, and second ends of the slave controllers are electrically connected to the plurality of power supply devices through the second aviation power/network cable.

Optionally, each power supply device comprises a power module and an I/O module, and the power module and the I/O module are respectively electrically connected to the second end of the corresponding slave controller;
wherein the first slave controller controlling the first power supply device to operate in response to the control signal comprises: the first slave controller controls a power module and an I/O module of the first power supply device to operate in response to the control signal.

Optionally, a power module and an I/O module of a same power supply device are integrated into a same electrical box.

According to a second aspect of embodiments of the present disclosure, a power supply apparatus is provided, the power supply apparatus comprises the power supply control device according to the first aspect.

According to a third aspect of embodiments of the present disclosure, a logistics distribution system is provided, and the logistics distribution system comprises the power supply control device according to the first aspect, and a load apparatus electrically connected to the power supply control device.

Optionally, the load apparatus is electrically connected to the power supply devices of the power supply control device.

Optionally, the load apparatus comprises a driver configured to drive the load apparatus to operate; the system further comprises a sensor configured to detect operation of the load apparatus, the driver and the sensor are respectively electrically connected to a power module of a respective one of the power supply devices, and are respectively electrically connected to an I/O module of the respective one of the power supply devices.

Optionally, a first connection end of a driver for driving the same load apparatus and a second connection end of a sensor for detecting the same load apparatus are provided in a same junction box; wherein the first connection end is configured to be electrically connected to the power module and the I/O module, and the second connection end is configured to be electrically connected to the power module and the I/O module.

A beneficial effect of embodiments of the present disclosure is that the master controller can output a control signal for operating a first power supply device to a first slave controller, and the first slave controller can control the first power supply device to operate in response to the control signal. That is, the master controller can instruct any one or more slave controllers, the slave controller can control the corresponding power supply device to operate under the instruction of the master controller, and the slave controller can share part of the processing load of the master controller, effectively improving the response speed of the master controller.

Other features and advantages of the present disclosure will become apparent from the following detailed description of exemplary embodiments of the present disclosure with reference to the accompanying drawings.

### BRIEF DESCRIPTION OF THE DRAWINGS

The accompanying drawings incorporated in and constituting a part of the specification illustrate embodiments of the present disclosure and together with the description thereof, serve to explain the principles of the disclosure.

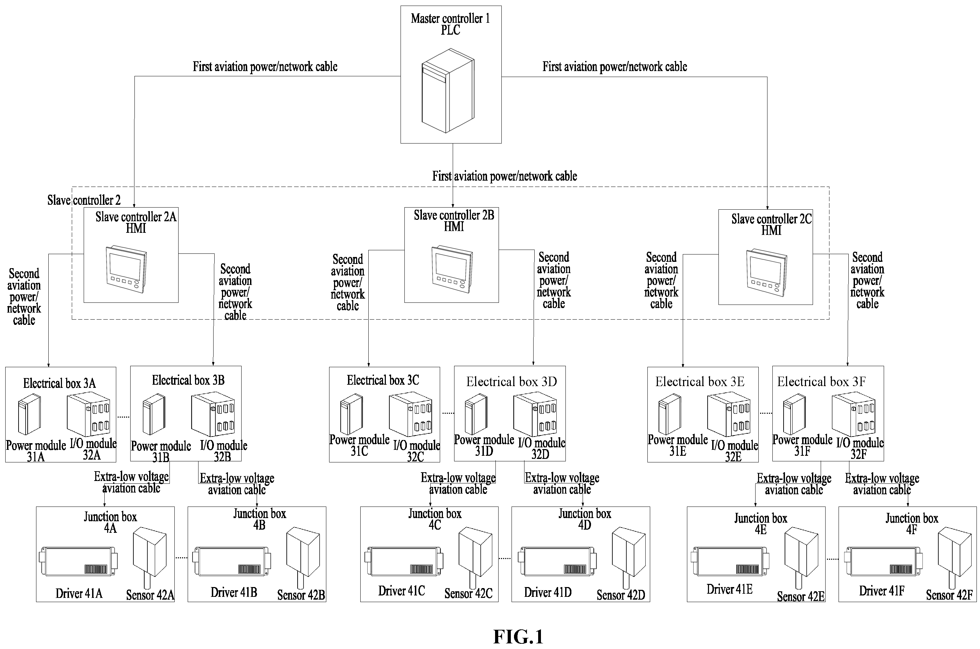

FIG. 1 is a structural block diagram of a power supply control device according to an embodiment.

### DETAILED DESCRIPTION

Various exemplary embodiments of the present disclosure will now be described in detail with reference to the accompanying drawings. It is to be noted that unless otherwise specified, the relative arrangements, numerical expressions and values of components and steps illustrated in the embodiments do not limit the scope of the present disclosure.

The description of at least one exemplary embodiment is for illustrative purpose only and in no way implies any restriction on the present disclosure, its application, or use.

Techniques, methods and devices known to those skilled in the prior art may not be discussed in detail; however, such techniques, methods and devices shall be regarded as part of the description where appropriate.

In all the examples illustrated and discussed herein, any specific value shall be interpreted as illustrative rather than restrictive. Therefore, other examples of the exemplary embodiments may have different values.

It is to be noted that similar reference numbers and alphabetical letters represent similar items in the accompanying drawings. Once an item is defined in one drawing, further reference to it may be omitted in subsequent drawings.

Referring to FIG. 1, a power supply control device according to an embodiment of the present disclosure will be described.

The power supply control device according to an embodiment of the present disclosure comprises:
a master controller 1;
a plurality of slave controllers 2, a first end of each slave controller 2 being electrically connected to the master controller 1;
a plurality of power supply devices, each power supply device being electrically connected to a second end of a corresponding slave controller 2;
wherein, when the master controller 1 outputs a control signal for operating a first power supply device to a first slave controller, the first slave controller controls the first power supply device to operate in response to the control signal; wherein the first slave controller is one of the plurality of slave controllers 2, and the first power supply device is one of the plurality of power supply devices and corresponds to the first slave controller.

In the present application, the master controller 1 is, for example, a PLC main control cabinet, and the slave controller 2 is, for example, an OP operation cabinet, which is configured with a Human Machine Interface (HMI) for a user to perform operations and view information such as the working status of the corresponding power supply device.

In some examples, as shown in FIG. 1, the master controller 1 may be electrically connected to slave controllers 2A-2C respectively.

In the present application, the above-mentioned first slave controller may be any one of the slave controllers 2. For example, as shown in FIG. 1, the first slave controller may be any one of slave controllers 2A-2C. The first power supply device may be the power supply device corresponding to the first slave controller.

In other words, the master controller 1 can instruct any one or more slave controllers 2, and the slave controllers 2 can control the corresponding power supply device to operate under the instruction of the master controller 1. The slave controller 2 can share part of the processing load of the master controller 1, effectively improving the response speed of the master controller 1.

In some embodiments, the power supply control device further comprises a first aviation power/network cable, and the first end of each slave controller 2 is electrically connected to the master controller 1 through the first aviation power/network cable.

In other words, by electrically connecting the slave controller 2 to the master controller 1 through the first aviation power/network cable, it is possible to effectively improve the stability of signals during the communication and interaction between the slave controller 2 and the master controller 1.

In some embodiments, the power supply control device further comprises a second aviation power/network cable, and the second end of each slave controller 2 is electrically connected to the plurality of power supply devices through the second aviation power/network cable.

In other words, by electrically connecting the slave controller 2 to the power supply devices through the second aviation power/network cable, it is possible to effectively improve the stability of signals during the communication and interaction between the slave controller 2 and the power supply devices.

In some embodiments, each power supply device comprises a power module and an I/O module, and the power module and the I/O module are respectively electrically connected to the second end of the corresponding slave controller 2;
wherein the first slave controller controlling the first power supply device to operate in response to the control signal comprises: the first slave controller controls a power module and an I/O module of the first power supply device to operate in response to the control signal.

In some examples, the I/O module can be used to collect operation data of a driver of a load apparatus and control the operation of the driver of the load apparatus, and the I/O module can also be used to collect data from and control the operation of a sensor 42 that detects the load apparatus.

In some examples, the power module can provide electrical energy to the load apparatus or the sensor, and the electrical energy may be electrical energy of an extra-low voltage such as 5V, 12V or 24V.

In some examples, as shown in FIG. 1, the slave controller 2A may be electrically connected to a power module 31A through the second aviation power/network cable, and may also be electrically connected to an I/O module 32A through the second aviation power/network cable.

In other words, by providing the power module and the I/O module, it is possible to supply electrical energy to the load apparatus and control the operation of the load apparatus.

In some embodiments, the power module and the I/O module of a same power supply device are integrated into a same electrical box. For example, as shown in FIG. 1, a power module 31C and an I/O module 32C are integrated into a same electrical box 3C.

In other words, by providing the power module and the I/O module in the same electrical box, it is possible to effectively improve the integration level of the power supply device, so as to facilitate the expansion of additional power supply devices.

According to an embodiment of the present disclosure, a power supply apparatus is provided. The power supply apparatus may comprise a power supply control device, and the power supply control device may be the power supply control device according to any of the above embodiments. In other words, by configuring the power supply apparatus with the power supply control device, it is possible to effectively reduce the processing load of the master controller 1 of the power supply apparatus.

According to an embodiment of the present disclosure, a logistics distribution system is provided. The logistics distribution system comprises a load apparatus and a power supply control device. The power supply control device may be the power supply control device according to any of the above embodiments, and the power supply control device is electrically connected to the load apparatus.

In other words, by configuring the logistics distribution system with the power supply control device, it is possible to effectively reduce the processing load of the master controller 1 of the logistics distribution system under the premise of controlling the operation of the load apparatus for logistics distribution and supplying electrical energy.

In some embodiments, the load apparatus is electrically connected to the power supply devices of the power supply control device.

In some examples, the load apparatus is electrically connected to the power supply devices of the power supply control device through an extra-low voltage aviation cable, so that the power supply device can supply electrical energy to the load apparatus and control the operation of the load apparatus.

In some embodiments, the load apparatus comprises a driver configured to drive the load apparatus to operate; the system further comprises a sensor configured to detect operation of the load apparatus, and the driver and the sensor are respectively electrically connected to a power module of a respective one of the power supply devices, and are respectively electrically connected to an I/O module of the respective one of the power supply devices.

In some examples, as shown in FIG. 1, a driver 41A may be respectively electrically connected to a power module 31B and an I/O module 32B through an extra-low voltage aviation cable, and a sensor 42A may also be respectively electrically connected to the power module 31B and the I/O module 32B through an extra-low voltage aviation cable.

In some examples, the load apparatus is, for example, a warehousing apparatus, the driver is, for example, a driver of a driving motor of the warehousing apparatus, and the sensor is, for example, a position sensor, a pressure sensor or the like of the warehousing apparatus, which is not limited herein. For example, as shown in FIG. 1, the driver of the driving motor of the warehousing apparatus may be a driver 41D, and the sensor may be a sensor 42E of the warehousing apparatus.

In other words, it is possible to control the operation of the driver and the sensor and collect the operation data from the driver and the sensor through the I/O module, and to supply electrical energy to the driver and the sensor through the power module.

In some embodiments, a first connection end of a driver for driving the same load apparatus and a second connection end of a sensor for detecting the same load apparatus are provided in a same junction box; wherein the first connection end is configured to be electrically connected to the power module and the I/O module, and the second connection end is configured to be electrically connected to the power module and the I/O module. For example, as shown in FIG. 1, a driver 41F and a sensor 42F are provided in a junction box 4F, the first connection end of the driver 41F is electrically connected to the power module 31F and the I/O module 32F, and the second connection end of the sensor 42F is also electrically connected to the power module 31F and the I/O module 32F.

In other words, by arranging the first connection end of the driver and the second connection end of the sensor in the same junction box, it is possible to facilitate the installation of the power supply device and the load apparatus.

Although some specific embodiments of the present disclosure have been described in detail through examples, those skilled in the art should understand that the above examples are for illustration only and are not intended to limit the scope of the present disclosure. Those skilled in the art should understand that the above embodiments can be modified without departing from the scope and spirit of the present disclosure. The scope of the present disclosure is defined by the accompanying claims.

## Claims

1. A power supply control device, **characterized by** comprising:
a master controller;
a plurality of slave controllers, a first end of each slave controller being electrically connected to the master controller; and
a plurality of power supply devices, each power supply device being electrically connected to a second end of a corresponding slave controller;
wherein, when the master controller outputs a control signal for operating a first power supply device to a first slave controller, the first slave controller controls the first power supply device to operate in response to the control signal; wherein the first slave controller is one of the plurality of slave controllers, and the first power supply device is one of the plurality of power supply devices and corresponds to the first slave controller.

2. The device according to claim 1, **characterized by** further comprising a first aviation power/network cable, and the first end of each slave controller is electrically connected to the master controller through the first aviation power/network cable.

3. The device according to claim 1, **characterized by** further comprising a second aviation power/network cable, and second ends of the slave controllers are electrically connected to the plurality of power supply devices through the second aviation power/network cable.

4. The device according to any one of claims 1 to 3, **characterized in that** each power supply device comprises a power module and an I/O module, and the power module and the I/O module are respectively electrically connected to the second end of the corresponding slave controller;
wherein the first slave controller controlling the first power supply device to operate in response to the control signal comprises: the first slave controller controls a power module and an I/O module of the first power supply device to operate in response to the control signal.

5. The device according to claim 4, **characterized in that** a power module and an I/O module of a same power supply device are integrated into a same electrical box.

6. A power supply apparatus, **characterized in that** the power supply apparatus comprises the power supply control device according to any one of claims 1 to 5.

7. A logistics distribution system, **characterized in that** the logistics distribution system comprises the power supply control device according to any one of claims 1 to 5, and a load apparatus electrically connected to the power supply control device.

8. The system according to claim 7, **characterized in that** the load apparatus is electrically connected to the power supply devices of the power supply control device.

9. The system according to claim 8, **characterized in that** the load apparatus comprises a driver configured to drive the load apparatus to operate; the system further comprises a sensor configured to detect operation of the load apparatus, the driver and the sensor are respectively electrically connected to a power module of a respective one of the power supply devices, and are respectively electrically connected to an I/O module of the respective one of the power supply devices.

10. The system according to claim 9, **characterized in that** a first connection end of a driver for driving the same load apparatus and a second connection end of a sensor for detecting the same load apparatus are provided in a same junction box; wherein the first connection end is configured to be electrically connected to the power module and the I/O module, and the second connection end is configured to be electrically connected to the power module and the I/O module.
